# EUROPÄISCHE PATENTSCHRIFT

(11) **EP 2 375 522 B1**
(45) Veröffentlichungstag und Bekanntmachung des Hinweises auf die Patenterteilung: **11.05.2016**
(21) Anmeldenummer: 11002536.8
(22) Anmeldetag: 28.03.2011
(51) Int. Cl.: H02G 3/12, H02G 3/08

(54) **Installationsdose für elektrotechnische Zwecke**
Installation socket for electro-technical purposes
Boîtier d'installation à des fins électrotechniques

(30) Priorität: 09.04.2010 DE 202010000544 U
(43) Veröffentlichungstag der Anmeldung: 12.10.2011
(73) Patentinhaber: Kaiser GmbH & Co. KG, 58579 Schalksmühle (DE)
(72) Erfinder: Kaiser, Burkard, 58509 Lüdenscheid (DE)
(74) Vertreter: Köchling, Conrad-Joachim

(56) Entgegenhaltungen:
- EP-A1- 1 965 005
- WO-A1-99/25941
- DE-A1- 2 249 951
- DE-A1-102005 051 596

## Beschreibung

Die Erfindung betrifft eine Installationsdose für elektrotechnische Zwecke, insbesondere zur Aufnahme von elektrotechnischen Teilen wie Schalter, Steckdosen, Verteilerdosen, insbesondere für den Betonbau, wobei die Installationsdose in vorzugsweise vorgefertigte Betonbauteile einzubetten ist und an Halteteilen des Betonbauteiles, insbesondere einer Stahlbewehrung, wie einer Baustahlmatte, befestigbar ist, wozu die Installationsdose mindestens einen Befestigungssteg aufweist.

Solche Installationsdosen sind im Stand der Technik bekannt. Es wird beispielsweise auf die DE 10 2005 051 596 B4 verwiesen. Insbesondere bei vorgefertigten Betonbauteilen werden solche Installationsdosen verwendet. Installationsdosen werden in geeigneter Weise mit Befestigungsstegen an Halteteilen des zu erzeugenden Betonbauteiles, insbesondere der Stahlbewehrung befestigt, beispielsweise durch einen Rödeldraht oder dergleichen, mittels dessen der oder die Befestigungsstege an einem Stab der Stahlbewehrung, insbesondere der Baustahlmatte, befestigt werden.

Durch diese Anordnung ist eine Positionierung der Installationsdose erreicht, so dass anschließend das Aufgießen von Beton oder dergleichen erfolgen kann, um das entsprechende Betonbauteil zu bilden. Die Installationsdose ist dann lagerichtig positioniert in dieses Betonbauteil eingebettet.

Die bisherige Installationsdose ist insofern verbesserungsbedürftig, als zwar mittels der Befestigungsstege eine Positionierung und Festlegung der Installationsdose an der Bewehrung erfolgen kann, jedoch der Montierende auf die genaue Positionierung der Installationsdose achten muss, bis er diese mit Rödeldraht oder dergleichen an der Bewehrung befestigt hat.

Aus der WO 99/25941 A1 ist ein Klemmelement zum Andrücken von Verbindungsstücken an die Schalung für ein Betonbauteil bekannt. Ein solches Klemmelement dient zum Andrücken von Verbindungsstücken, wie Wandanschluss-, Anker- oder Schlauchverbindungselementen, an die Schalung für ein herzustellendes bewehrtes Betonbauteil. An dem Verbindungsstück kann eine Druck- oder Zugfeder zum Herstellen einer Vorspannung zwischen dem ersten und dem zweiten Abstützkörper im Einbauzustand zwischen der Bewehrung und der Schaffung des herzustellenden Betonbauteils angeordnet sein. Hieran ist ein Befestigungsmittel zum Befestigen des Klemmelementes an mindestens einem Bewehrungsstab des herzustellenden Betonbauteils vorgesehen.

Aus der EP 1 965 005 A1 ist ein rohrförmiges Teil vorbekannt, welches mit Verankerungselementen an Bewehrungsstäben einer Bewehrung eines Bauteiles befestigbar ist.

Ausgehend von dem eingangs genannten Stand der Technik liegt der Erfindung die Aufgabe zugrunde, eine Installationsdose zu schaffen, die in einfacher Weise fixiert werden kann ohne Rödelung und/oder anschließend beispielsweise die Endpositionierung durch Verrödeln des Befestigungssteges an der Baustahlmatte zusätzlich erfolgen kann.

Zur Lösung dieser Aufgabe schlägt die Erfindung vor, dass zusätzlich ein Klemmsteg vorgesehen ist, um zwischen diesem und dem Befestigungssteg ein Halteteil des Betonbauteiles klemmend aufzunehmen, und dass die Installationsdose zwei zueinander etwa parallele, mit seitlichem Abstand voneinander angeordnete Befestigungsstege aufweist, zwischen denen der zusätzliche Klemmsteg angeordnet ist.

Gemäß dieser Ausbildung weist die Installationsdose zusätzlich einen Klemmsteg auf. Zur Fixierung der Installationsdose kann diese mit dem Klemmsteg auf ein Halteteil des Betonbauteiles, insbesondere einen Stab einer Stahlbewehrung aufgeklemmt werden, in dem beispielsweise der Befestigungssteg einen Stab der

Stahlbewehrung untergreift, während der Klemmsteg den entsprechenden Stab der Stahlbewehrung übergreift, so dass eine klemmende Fixierung der Installationsdose an der Stahlbewehrung oder dergleichen erreicht ist.

Durch diese Ausbildung wird die exakte Fixierung verbessert, da die beiden zueinander parallelen und mit seitlichem Abstand voneinander angeordneten Befestigungsstege in der Montagesollposition, beispielsweise einen Stab einer Bewehrungsmatte untergreifen, während der zwischen diesen angeordnete zusätzliche Klemmsteg den Stab der Bewehrungsmatte übergreift, so dass eine klemmende Fixierung der Installationsdose erreicht ist.

Bevorzugt ist vorgesehen, dass das Halteteil ein Stab der Stahlbewehrung ist.

Vorzugsweise ist dabei vorgesehen, dass die Installationsdose mindestens einen Befestigungsbügel aufweist, der zwei Befestigungsstege bildet, zwischen denen ein zusätzlicher Klemmsteg angeordnet ist.

Der Befestigungsbügel, der beispielsweise U-förmig ausgebildet sein kann, weist zwei Schenkel auf, die die beiden Befestigungsstege bilden. Zwischen diesen ist der zusätzliche Klemmsteg angeordnet.

In an sich bekannter Weise ist bevorzugt vorgesehen, dass die Installationsdose seitlich zum Mantel abragende Befestigungsstege oder Befestigungsbügel, vorzugsweise einander gegenüberliegend aufweist.

Die im Regelfall zylindrische Installationsdose weist vom Mantel abragend auf gegenüber liegenden Seiten entsprechende Befestigungsstege oder Befestigungsbügel auf. Zusätzlich ist bei dieser Ausbildung zwischen den Schenkeln des Befestigungsbügels oder in der Nähe des Befestigungssteges die Anordnung eines zusätzlichen Klemmsteges vorgenommen, um die klemmende Fixierung zu erreichen. Bei dieser Anordnung ist es möglich, die Fixierung an beiden von der Installationsdose abragenden Befestigungsstegen oder Befestigungsbügeln vorzunehmen.

Zusätzlich ist vorzugsweise vorgesehen, dass der Klemmsteg im Wesentlichen parallel zu dem Befestigungssteg oder zu den Befestigungsstegen gerichtet verläuft.

Des Weiteren kann bevorzugt vorgesehen sein, dass der Klemmsteg mit einem Ende an der Installationsdose befestigt oder angeformt ist.

Auch kann vorgesehen sein, dass der Klemmsteg mit einem Ende an dem Befestigungssteg befestigt oder angeformt ist, oder bei Ausbildung eines Befestigungsbügels mit zwei Befestigungsstegen am die Befestigungsstege verbindenden Bügelbereich befestigt oder angeformt ist.

Bevorzugt ist eine Kombination dieser Merkmale, wobei dann, wenn beidseitig von der Installationsdose beispielsweise Befestigungsbügel abragen, bezüglich des einen abragenden Bügels der Klemmsteg mit einem Ende an der Installationsdose befestigt oder angeformt ist, während das andere Ende frei ist und der Klemmsteg so beweglich ist. Bei dem anderen Befestigungsbügel ist der Klemmsteg, an dem die Befestigungsstege verbindenden Bügelbereich befestigt, während wiederum das andere Ende frei ist. Diese Anordnung erlaubt eine gute Anpassung an die Befestigungsmöglichkeiten an eine Baustahlgewebematte.

Bevorzugt ist zudem vorgesehen, dass der Klemmsteg etwa gleich lang wie der Befestigungssteg ausgebildet ist.

Insbesondere ist vorgesehen, dass der Klemmsteg biegeelastisch ausgebildet ist.

Der Klemmsteg kann selbst biegeelastisch ausgebildet sein oder aber die Befestigungs- oder Anformungsstelle an der Installationsdose oder an dem Bügelbereich ist biegelastisch ausgebildet, so dass der Klemmsteg elastisch bewegt werden kann, um die klemmende Verbindung an einem Steg einer Baustahlgewebematte oder dergleichen zu bewirken.

Um die dauerhafte Positionierung der Installationsdose zu fördern, kann vorgesehen sein, dass der Klemmsteg auf mindestens einer seiner Flächen, vorzugsweise auf beiden Flächen, die parallel zu einem Boden oder einer Mündung der Installationsdose ausgerichtet ist beziehungsweise sind, Rastmittel aufweist.

Durch diese Ausbildung wird erreicht, dass bei in Klemmlage befindlichem Klemmsteg, wenn dieser also an einem Stab einer Baustahlmatte oder dergleichen angreift, dieser durch die Rastmittel in unterschiedlichen Positionen fixiert gehalten ist und nicht verrutschen kann.

Bevorzugt kann dabei vorgesehen sein, dass der Klemmsteg über seine Länge gewellt ausgebildet ist, wobei durch die Wellenberge und -täler Rastmittel gebildet sind.

Insbesondere ist bevorzugt vorgesehen, dass der Klemmsteg ein Materialstreifen geringer Dicke und großer Breite ist, wobei die Breitseiten parallel zum Boden oder der Mündung der Installationsdose ausgerichtet sind.

Alternativ oder zusätzlich kann vorgesehen sein, dass der Klemmsteg auf seiner Oberseite und/oder Unterseite die etwa parallel zu einem Boden oder einer Mündung der Installationsdose gerichtet ist, keilförmige Stützteile aufweist, deren Keilform vom freien Ende zum Befestigungsende des Klemmsteges abfallend ausgerichtet ist.

Durch die keilförmigen Stützteile wird in der Klemmlage eine höhere Klemmspannung erreicht, so dass der sichere Sitz bei der Fixierung noch verbessert ist.

Hierzu kann vorgesehen sein, dass der Klemmsteg an den Längsrandkanten der Oberseite und/oder Unterseite keilförmige Wandungsflächen aufweist, die die keilförmigen Stützteile bilden.

Alternativ oder zusätzlich kann auch vorgesehen sein, dass der Befestigungssteg oder die Befestigungsstege auf mindestens einer ihrer etwa parallel zu einem Boden oder einer Mündung der Installationsdose ausgerichteten Kantenflächen Rastmittel aufweist oder aufweisen.

Bei dieser Anordnung ist zusätzlich oder alternativ eine entsprechende Ausbildung von Rastmitteln an den Kanten des Befestigungssteges oder der Befestigungsstege vorgesehen, wodurch wiederum in der Montagesolllage der fixierte Sitz noch verbessert wird.

Insbesondere kann hierzu vorgesehen sein, dass die Kantenflächen gewellt ausgebildet sind, so dass die Wellentäler und -berge die Rastmittel bilden.

Alternativ oder zusätzlich kann auch vorgesehen sein, dass der Befestigungssteg oder die Befestigungsstege an mindestens einer ihrer etwa parallel zu einem Boden oder einer Mündung der Installationsdose ausgerichteten Kantenflächen keilförmig ausgebildet ist oder sind, wobei die Keilform vorzugsweise vom der Installationsdose nahen Ende zum dieser fernen Ende ansteigt.

Da es häufig erforderlich ist, mehrere Installationsdosen eng benachbart nebeneinander anzuordnen, die dann exakt zueinander in Linie ausgerichtet sein sollen, ist vorgesehen, dass der Befestigungssteg oder die Befestigungsstege an seinen oder ihren Längsseitenflächen verhakungsmittel oder Rastmittel aufweisen, mittels derer parallel zueinander ausgerichtete Befestigungsstege von nebeneinander angeordneten Installationsdosen miteinander lösbar verbindbar sind.

Hierbei können die nebeneinander angeordneten und ausgerichteten Installationsdosen miteinander lösbar verbunden werden, so dass diese dann an entsprechenden Stegen oder Stäben einer Baustahlmatte fixiert werden können.

In einer Ausführungsform kann vorgesehen sein, dass die Befestigungsstege und/oder die Klemmstege lösbar am Körper der Installationsdose oder an einem Verschlussdeckel der Installationsdose befestigt sind.

Hierbei sind die Befestigungsstege und/oder die Klemmstege separat gefertigte Elemente, die lösbar am Körper der Installationsdose oder auch an einem Verschlussdeckel der Installationsdose befestigt werden können, um dann die Installationsdose gebrauchsfähig für die entsprechende Anwendung zur Verfügung zu stellen.

Alternativ kann vorgesehen sein, dass die Befestigungsstege und/oder die Klemmstege integraler Bestandteil des Dosenkörpers oder eines Verschlussdeckels der Installationsdose sind.

Hierbei sind die Befestigungsstege und/oder die Klemmstege einstückig mit dem Dosenkörper oder mit einem Verschlussdeckel der Installationsdose ausgebildet.

Um die Steifigkeit der Befestigungsstege zu verbessern, ist vorgesehen, dass die Befestigungsstege im Querschnitt U-förmig oder V-förmig ausgebildet sind, wobei die U-Form oder V-Form zu der vom Boden der Dose öder zu der von der Mündung der Installationsdose aufgespannten Ebene offen ausgebildet sind.

Um bei entsprechenden Einbauerfordernissen eine korrekte Anordnung zu ermöglichen, kann vorgesehen sein, dass die Befestigungsstege und/oder die Klemmstege außermittig zur Höhe der Installationsdosen angeordnet sind. Hierdurch sind zwei Abstandspositionen zur Schalung einstellbar.

Um bei nebeneinander angeordneten Installationsdosen eine geeignete Verbindung zwischen den Installationsdosen zur Verfügung zu stellen, ist vorgesehen, dass der Dosenkörper der Installationsdose und/oder ein die Mündung der Installationsdose verschließender Deckel Anreihmittel aufweist, mittels derer eine Installationsdose und/oder ein Deckel mit einer weiteren Installationsdose oder einem weiteren Deckel verbindbar ist.

Um eine entsprechende Installationsdose mit sämtlichen Bestandteilen in einfacher Form als Spritzgießerzeugnis herstellen zu können, ist vorgesehen, dass die Bestandteile der Installationsdose, nämlich der Dosenkörper, ein auf die Mündung des Dosenkörpers aufrastbarer Deckel sowie der oder die Befestigungsstege und oder der die Klemmstege einen Spritzgießformling bilden, dessen Trennebene parallel zum Boden oder zur Mündung der Installationsdose verläuft, wobei der Deckel über einen durchtrennbaren Steg mit einem Teil eines Befestigungssteges oder mit dem Dosenkörper verbunden ist.

Solche Installationsdosen werden üblicherweise mit sämtlichen Bestandteilen aus spritzgießfähigem Kunststoff hergestellt. Die entsprechende Anordnung ermöglicht es, das komplette Element in einfacher Weise mit einem relativ einfachen Spritzgießwerkzeug zu fertigen.

Ausführungsbeispiele der Erfindung sind in der Zeichnung dargestellt und im Folgenden näher beschrieben. Es zeigt:
- Figur 1 bis 6: eine erste Ausführungsform in unterschiedlichen Ansichten;
- Figur 7 bis 12: eine weitere Ausführungsform in unterschiedlichen Ansichten;
- Figur 13: eine Installationsdose im eingebauten Zustand in Ansicht.

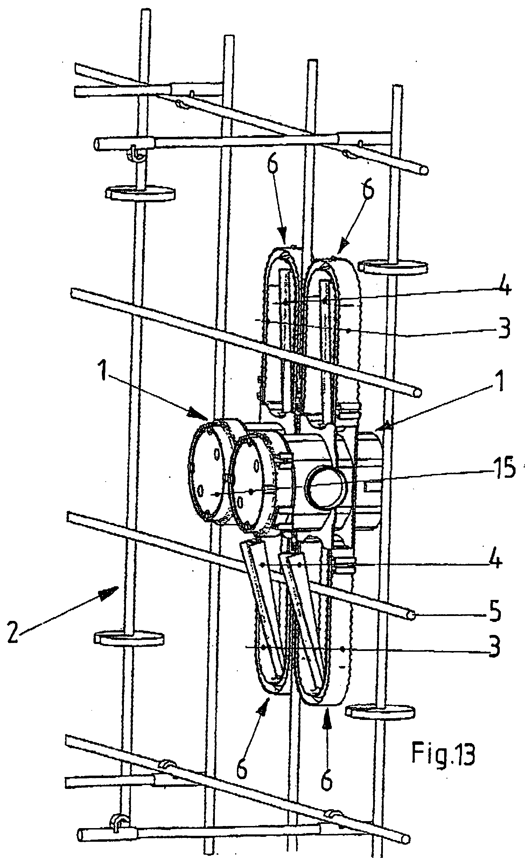

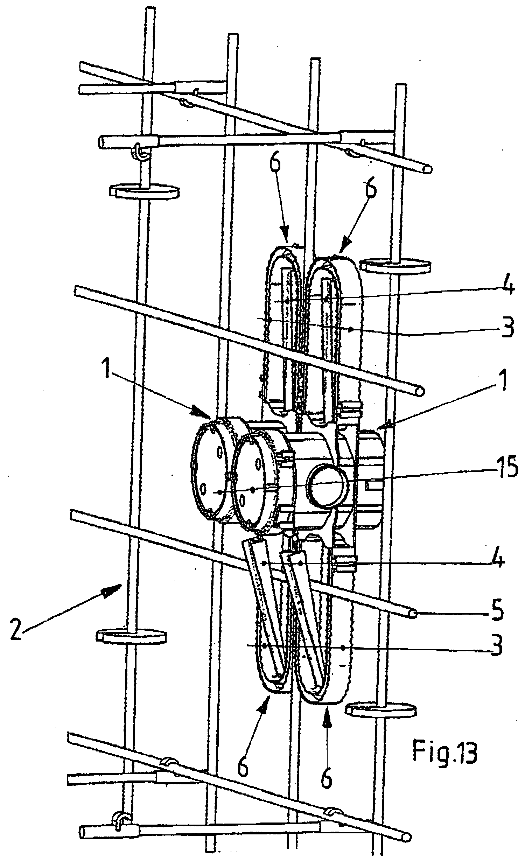

In der Zeichnung sind Installationsdosen 1 für elektrotechnische Zwecke gezeigt, die beispielsweise zur Aufnahme von elektrotechnischen Teilen, wie Schalter, Steckdosen, Verteilerdosen oder dergleichen dienen. Solche Installationsdosen sind vornehmlich für den Betonbau vorgesehen. Sie werden in vorgefertigte Betonbauteile eingebettet. Zur Vorbereitung werden die Installationsdosen vor dem Vergießen des Betonmaterials an der Stahlbewehrung 2 vorzugsweise einer Baustahlmatte, wie in Figur 13 gezeigt ist, befestigt. Hierzu weisen die Installationsdosen 1 mindestens einen Befestigungssteg 3 auf. Herkömmlich werden solche Installationsdosen mit entsprechenden Befestigungsstegen 3 mittels Rödeldraht oder dergleichen Befestigungsmitteln an einem Stab einer Stahlbewehrung 2 befestigt, um die Lage der Installationsdose während des Gießprozesses, wenn also Betonmaterial aufgebracht wird, zu sichern.

Um die Fixierung solcher Installationsdosen zu erleichtern und zu verbessern, ist zusätzlich mindestens ein Klemmsteg 4 vorgesehen, um zwischen diesem und dem oder den Befestigungsstegen 3 ein Halteteil 5 des Betonbauteiles, insbesondere einen Stab einer Stahlbewehrung 2 klemmend aufzunehmen, wie dies beispielsweise in Figur 13 verdeutlicht ist.

Im Ausführungsbeispiel weist jede Installationsdose 1 zwei zueinander etwa parallel und mit seitlichem Abstand voneinander angeordnete Befestigungsstege 3 auf, zwischen denen jeweils ein zusätzlicher Klemmsteg 4 angeordnet ist. Insbesondere weist jeweils die Installationsdose 1 mindestens einen Befestigungsbügel 6 auf, der zwei Befestigungsstege 3 bildet, zwischen denen jeweils ein zusätzlicher Klemmsteg 4 angeordnet ist. Der Abstand zwischen Klemmsteg 4 und Befestigungsbügel 6 ist so groß gewählt, dass auch der Einsatz einer Rödelpistole zum Verrödeln möglich ist.

Die Installationsdose 1 weist dabei seitlich zum Mantel abragende Befestigungsstege 3 oder Befestigungsbügel 6, insbesondere einander gegenüberliegend auf. Der Klemmsteg 4 ist im Wesentlichen parallel zu dem Befestigungssteg 3 beziehungsweise den Befestigungsstegen 3 ausgerichtet.

Hierdurch wird eine entsprechende Länge des Klemmsteges 4 zwischen den Befestigungsstegen 3 ermöglicht. Es wäre auch eine andere Anordnung des Klemmsteges möglich, beispielsweise quer zu den Befestigungsstegen 3.

Im Ausführungsbeispiel ist jeweils ein Klemmsteg 4 mindestens mittelbar an der Installationsdose 1 befestigt oder angeformt (Befestigungsstelle 7). An der gleichen Installationsdose 1 ist ein weiterer Klemmsteg 4 vorgesehen, der aber am die Befestigungsstege 3 verbindenden Bügelbereich des Befestigungsbügels 6 angeformt ist. Die Befestigungsstelle ist bei 8 angegeben.

Bei allen Ausführungsformen ist der Klemmsteg 4 jeweils etwa gleich lang wie die Befestigungsstege 3 ausgebildet. Vorzugsweise ist der Klemmsteg 4 biegelastisch ausgebildet. Zusätzlich ergibt sich eine Biegeelastizität, um die Befestigungsbereiche 7 beziehungsweise 8.

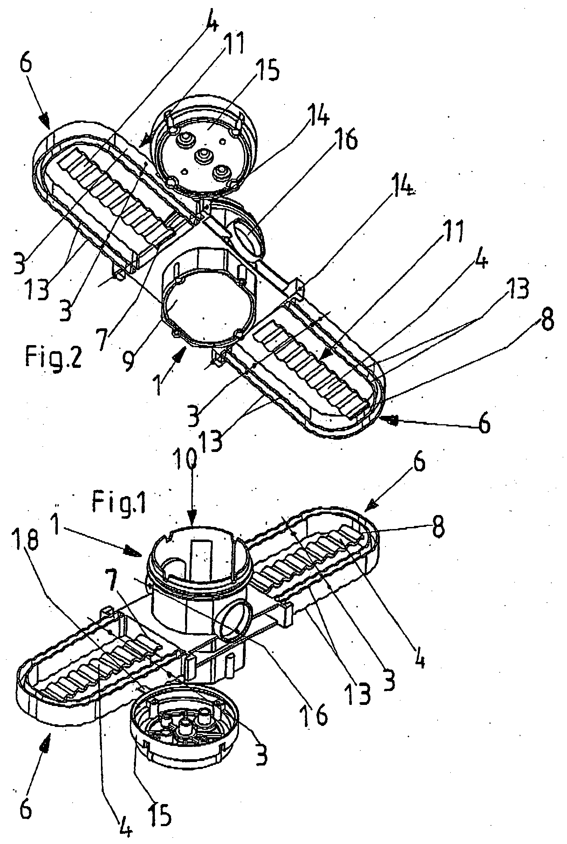

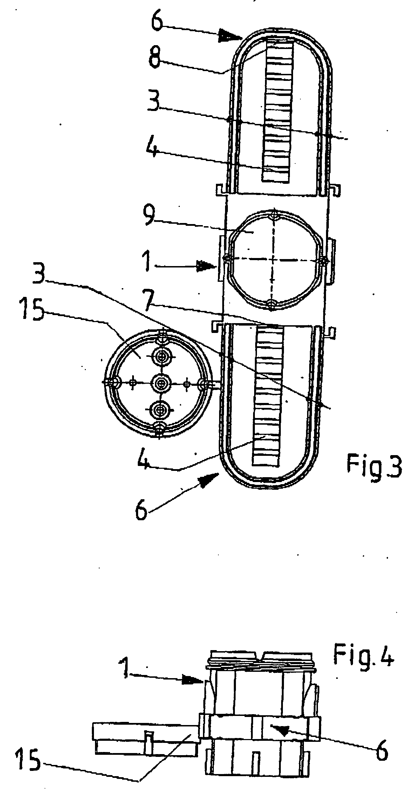

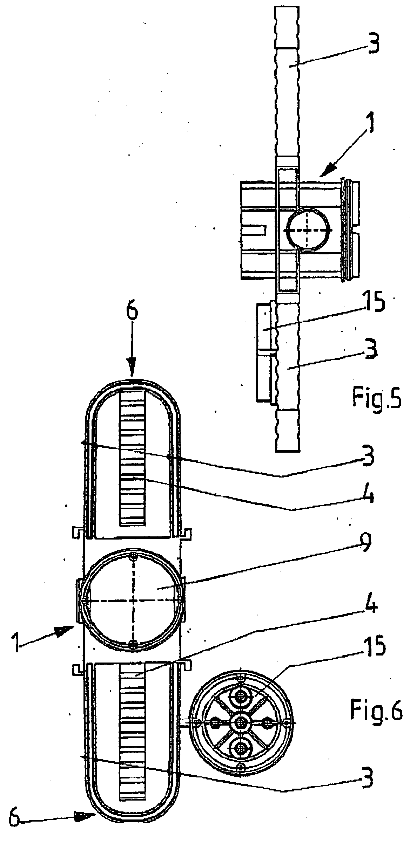

Bei der Ausführungsform nach Figur 1 bis 6 weist der Klemmsteg auf beiden Flächen, die parallel zu einem Boden 9 beziehungsweise zur Mündung 10 der Installationsdose ausgerichtet sind, Rastmittel 11 auf, wobei die Rastmittel dadurch gebildet sind, dass der Klemmsteg 4 über seine Länge gewellt ist, wobei die Wellen quer zu seiner Längserstreckung gerichtet sind und wobei durch die Wellenberge und die Wellentäler die Rastmittel 11 gebildet sind.

Insbesondere ist bei den Ausführungsformen der Klemmsteg ein Materialstreifen geringer Dicke und großer Breite, wobei die Breitseiten jeweils parallel zum Boden 9 beziehungsweise zur Mündung 10 der Installationsdose 1 ausgerichtet sind.

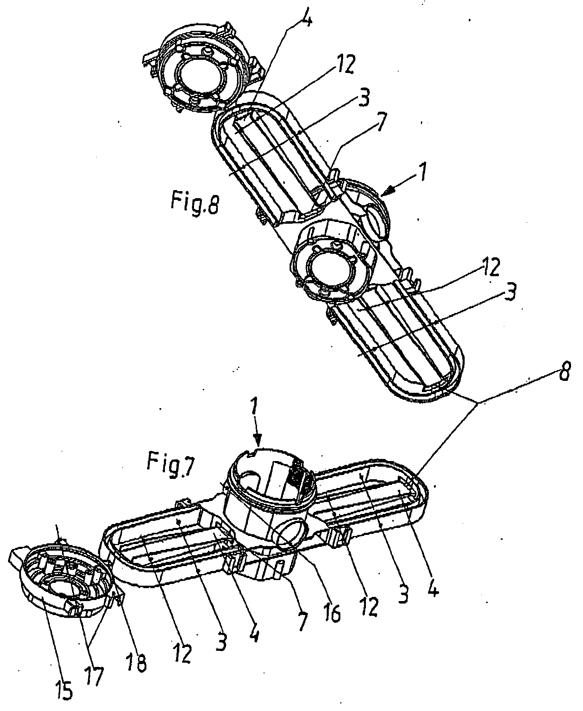

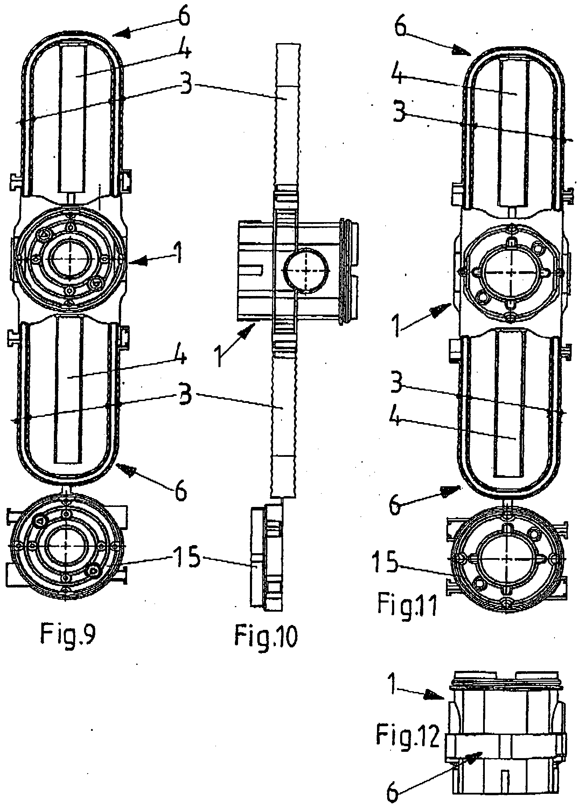

Bei der Ausführungsform gemäß Figur 7 bis Figur 12 sowie auch bei der Ausführungsform nach Figur 13 weist der Klemmsteg 4 auf seiner Oberseite und auf seiner Unterseite die jeweils etwa parallel zu einem Boden 9 beziehungsweise zur Mündung 10 der Installationsdose 1 gerichtet sind, keilförmige Stützteile 12 auf, deren Keilform vom freien Ende zum Befestigungsende (7 beziehungsweise 8) des Klemmsteges 4 abfallend geneigt ausgerichtet ist. Hierzu weist jeweils der Klemmsteg 4 an den Längsrandkanten der Oberseite und der Unterseite keilförmige Wandungsflächen auf, die die keilförmigen Stützteile 12 bilden.

Die Befestigungsstege 3 weisen ebenfalls auf ihren etwa parallel zum Boden 9 oder zur Mündung 10 der Installationsdose 1 ausgerichteten Kantenflächen Rastmittel 13 auf. Insbesondere sind diese Kantenflächen gewellt ausgebildet, so dass die Wellentäler und -berge die Rastmittel 13 bilden.

Alternativ könnte auch vorgesehen sein, dass die Befestigungsstege 3 an diesen Kantenflächen keilförmig ausgebildet sind, ähnlich den keilförmigen Stützteilen 12.

Zusätzlich weisen die Befestigungsstege 3 an ihren Längsseitenflächen nach außen abragende Verhakungsmittel oder Rastmittel 14 auf, mittels derer parallel zueinander ausgerichtete Befestigungsstege 3 von nebeneinander angeordneten Installationsdosen 1 miteinander.lösbar verbunden sind.

Obwohl andere Ausbildungen möglich sind, sind in den Ausführungsbeispielen die Befestigungsstege 3 und die Klemmstege 4 jeweils integrale Bestandteile des Dosenkörpers der Installationsdose 1. Vorzugsweise sind die Befestigungsstege 3 im Querschnitt etwa U-förmig ausgebildet, wobei die Öffnung der U-Form gleich gerichtet zur Mündung 10 der Dose ausgerichtet sind.

Wie aus den Ausführungsbeispielen ersichtlich, sind die Befestigungsstege 3 beziehungsweise die Klemmstege 4 nicht mittig der Höhe der Installationsdose 1 angeordnet, sondern zum Boden 9 hin versetzt, so dass sie etwa auf ein Drittel der Höhe der Installationsdose von dieser abragend vorgesehen sind.

Zusätzlich weist der Dosenkörper der Installationsdose 1 und gegebenenfalls auch ein auf die Mündung 10 der Installationsdose 1 aufrastbarer Deckel 15 Anreihmittel 16 beziehungsweise 17 auf, mittels derer eine Installationsdose 1 beziehungsweise ein daran befindlicher Deckel 15 mit einer weiteren Installationsdose 1 beziehungsweise deren Deckel verbindbar ist.

Wie sich aus den Ausführungsbeispielen ergibt, sind die Bestandteile der Installationsdose 1, nämlich der Dosenkörper, der auf die Mündung des Dosenkörpers aufrastbare Deckel 15 sowie die Befestigungsstege 3 und die Klemmstege 4 so ausgerichtet, dass sie einen Spritzgießformling bilden, dessen Trennebene parallel zum Boden 9 beziehungsweise zur Mündung 10 der Installationsdose 1 verläuft. Der Deckel 15 ist dabei über einen abtrennbaren Steg 18 mit einem Teil eines Befestigungssteges 3 oder auch gegebenenfalls mit dem Dosenkörper verbunden. Auf diese Weise lässt sich die komplette Einheit in einem entsprechenden Spritzgießwerkzeug mit einfachen Werkzeugen leicht herstellen.

Ein Anwendungsbeispiel einer Ausführungsform ist in Figur 13 gezeigt. Dabei ist ein Stab 5 der Baustahlgewebematte 2 zwischen Befestigungsstegen 3 und jeweils einem Klemmsteg 4 der Installationsdose 1 eingeklemmt gehalten. Im Ausführungsbeispiel ist die Fixierung nur einseitig gezeigt, tatsächlich kann diese Fixierung aber auch beidseitig, also an dem anderen vorragenden Bügel erfolgen. Durch die entsprechende Keilform der Kanten der Klemmstege 4 wird eine hohe Vorspannung erreicht, so dass ein sicherer Sitz in der Vormontagelage gewährleistet ist. Zusätzlich kann aber dennoch eine Fixierung dieser Installationsdosen mittels Rödeldraht erfolgen, in dem um die Befestigungsstege 3 und den entsprechenden Stab 5 ein Draht gelegt und entsprechend verrödelt wird. Auch andere Befestigungsmöglichkeiten, beispielsweise mit Klebeband oder dergleichen sind möglich.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Installationsdose (1) für elektrotechnische Zwecke, insbesondere zur Aufnahme von elektrotechnischen Teilen wie Schalter, Steckdosen, Verteilerdosen, insbesondere für den Betonbau, wobei die Installationsdose (1) in vorzugsweise vorgefertigte Betonbauteile einzubetten ist und an Halteteilen (5) des Betonbauteiles, insbesondere einer Stahlbewehrung (2), wie einer Baustahlmatte, befestigbar ist, wozu die Installationsdose (1) mindestens einen Befestigungssteg (3) aufweist, **dadurch gekennzeichnet, dass** zusätzlich ein Klemmsteg (4) vorgesehen ist, um zwischen diesem und dem Befestigungssteg (3) ein Halteteil (5) des Betonbauteiles klemmend aufzunehmen, und dass die Installationsdose (1) zwei zueinander etwa parallele, mit seitlichem Abstand voneinander angeordnete Befestigungsstege (3) aufweist, zwischen denen der zusätzliche Klemmsteg (4) angeordnet ist.

2. Installationsdose nach Anspruch 1, **dadurch gekennzeichnet, dass** das Halteteil ein Stab der Stahlbewehrung ist.

3. Installationsdose nach Anspruch 1, **dadurch gekennzeichnet, dass** die Installationsdose (1) mindestens einen Befestigungsbügel (6) aufweist, der zwei Befestigungsstege (3) bildet, zwischen denen ein zusätzlicher Klemmsteg (4) angeordnet ist.

4. Installationsdose nach einem der Ansprüche 1 bis 3, **dadurch gekennzeichnet, dass** die Installationsdose (1) seitlich zum Mantel abragende Befestigungsstege (3) oder Befestigungsbügel (6), vorzugsweise einander gegenüberliegend aufweist.

5. Installationsdose nach einem der Ansprüche 1 bis 4, **dadurch gekennzeichnet, dass** der Klemmsteg (4) im Wesentlichen parallel zu dem Befestigungssteg (3) oder zu den Befestigungsstegen (3) gerichtet verläuft.

6. Installationsdose nach einem der Ansprüche 1 bis 5, **dadurch gekennzeichnet, dass** der Klemmsteg (4) mit einem Ende an der Installationsdose (1) befestigt oder angeformt ist.

7. Installationsdose nach einem der Ansprüche 1 bis 5, **dadurch gekennzeichnet, dass** der Klemmsteg (4) mit einem Ende an dem Befestigungssteg (3) befestigt oder angeformt ist, oder bei Ausbildung eines Befestigungsbügels (6) mit zwei Befestigungsstegen (3) am die Befestigungsstege (3) verbindenden Bügelbereich befestigt oder angeformt ist.

8. Installationsdose nach einem der Ansprüche 1 bis 7, **dadurch gekennzeichnet, dass** der Klemmsteg (4) etwa gleich lang wie der Befestigungssteg (3) ausgebildet ist.

9. Installationsdose nach einem der Ansprüche 1 bis 8, **dadurch gekennzeichnet, dass** der Klemmsteg (4) biegeelastisch ausgebildet ist.

10. Installationsdose nach einem der Ansprüche 1 bis 9, **dadurch gekennzeichnet, dass** der Klemmsteg (4) auf mindestens einer seiner Flächen, vorzugsweise auf beiden Flächen, die parallel zu einem Boden (9) oder einer Mündung (10) der Installationsdose (1) ausgerichtet ist beziehungsweise sind, Rastmittel (11) aufweist.

11. Installationsdose nach Anspruch 10, **dadurch gekennzeichnet, dass** der Klemmsteg (4) über seine Länge gewellt ausgebildet ist, wobei durch die Wellenberge und -täler Rastmittel (11) gebildet sind.

12. Installationsdose nach einem der Ansprüche 1 bis 11, **dadurch gekennzeichnet, dass** der Klemmsteg (4) ein Materialstreifen geringer Dicke und großer Breite ist, wobei die Breitseiten parallel zum Boden (9) oder der Mündung (10) der Installationsdose (1) ausgerichtet sind.

13. Installationsdose nach einem der Ansprüche 1 bis 12, **dadurch gekennzeichnet, dass** der Klemmsteg (4) auf seiner Oberseite und/oder Unterseite die etwa parallel zu einem Boden (9) oder einer Mündung (10) der Installationsdose (1) gerichtet ist, keilförmige Stützteile (12) aufweist, deren Keilform vom freien Ende zum Befestigungsende (7 bzw.8) des Klemmsteges (4) abfallend ausgerichtet ist.

14. Installationsdose nach Anspruch 13, **dadurch gekennzeichnet, dass** der Klemmsteg (4) an den Längsrandkanten der Oberseite und/oder Unterseite keilförmige Wandungsflächen aufweist, die die keilförmigen Stützteile (12) bilden.

15. Installationsdose nach einem der Ansprüche 1 bis 14, **dadurch gekennzeichnet, dass** der Befestigungssteg (3) oder die Befestigungsstege (3) auf mindestens einer ihrer etwa parallel zu einem Boden (9) oder einer Mündung (10) der Installationsdose (1) ausgerichteten Kantenflächen Rastmittel (13) aufweist oder aufweisen.

16. Installationsdose nach Anspruch 15, **dadurch gekennzeichnet, dass** die Kantenflächen gewellt ausgebildet sind, so dass die Wellentäler und -berge die Rastmittel (13) bilden.

17. Installationsdose nach einem der Ansprüche 1 bis 14, **dadurch gekennzeichnet, dass** der Befestigungssteg (3) oder die Befestigungsstege (3) an mindestens einer ihrer etwa parallel zu einem Boden (9) oder einer Mündung (10) der Installationsdose (1) ausgerichteten Kantenflächen keilförmig ausgebildet ist oder sind, wobei die Keilform vorzugsweise vom der Installationsdose (1) nahen Ende zum dieser fernen Ende ansteigt.

18. Installationsdose nach einem der Ansprüche 1 bis 17, **dadurch gekennzeichnet, dass** der Befestigungssteg (3) oder die Befestigungsstege (3) an seinen oder ihren Längsseitenflächen Verhakungsmittel (14) oder Rastmittel aufweisen, mittels derer parallel zueinander ausgerichtete Befestigungsstege (3) von nebeneinander angeordneten Installationsdosen (1) miteinander lösbar verbindbar sind.

19. Installationsdose nach einem der Ansprüche 1 bis 18, **dadurch gekennzeichnet, dass** die Befestigungsstege (3) und/oder die Klemmstege (4) lösbar am Körper der Installationsdose (1) oder an einem Verschlussdeckel (15) der Installationsdose (1) befestigt sind.

20. Installationsdose nach einem der Ansprüche 1 bis 18, **dadurch gekennzeichnet, dass** die Befestigungsstege (3) und/oder die Klemmstege (4) integraler Bestandteil des Dosenkörpers oder eines Verschlussdeckels (15) der Installationsdose (1) sind.

21. Installationsdose nach einem der Ansprüche 1 bis 20, **dadurch gekennzeichnet, dass** die Befestigungsstege (3) im Querschnitt U-förmig oder V-förmig ausgebildet sind, wobei die U-Form oder V-Form zu der vom Boden (9) der Dose oder zu der von der Mündung (10) der Installationsdose (1) aufgespannten Ebene offen ausgebildet sind.

22. Installationsdose nach einem der Ansprüche 1 bis 21, **dadurch gekennzeichnet, dass** die Befestigungsstege (3) und/oder die Klemmstege (4) außermittig zur Höhe der Installationsdosen (1) angeordnet sind.

23. Installationsdose nach einem der Ansprüche 1 bis 22, **dadurch gekennzeichnet, dass** der Dosenkörper der Installationsdose (1) und/oder ein die Mündung (10) der Installationsdose (1) verschließender Deckel (15) Anreihmittel (16,17) aufweist, mittels derer eine Installationsdose (1) und/oder ein Deckel (15) mit einer weiteren Installationsdose (1) oder einem weiteren Deckel (15) verbindbar ist.

24. Installationsdose nach einem der Ansprüche 1 bis 23, **dadurch gekennzeichnet, dass** die Bestandteile der Installationsdose (1), nämlich der Dosenkörper, ein auf die Mündung (10) des Dosenkörpers aufrastbarer Deckel (15) sowie der oder die Befestigungsstege (3) und der der die Klemmstege (4) einen Spritzgießformling bilden, dessen Trennebene parallel zum Boden (9) oder zur Mündung (10) der Installationsdose (1) verläuft, wobei der Deckel (15) über einen durchtrennbaren Steg (18) mit einem Teil eines Befestigungssteges (3) oder mit dem Dosenkörper verbunden ist.

## Claims

1. An installation box (1) for electrical purposes, in particular for receiving electrical parts such as switches, sockets, distribution boxes, in particular for use in concrete, the installation box (1) preferably being embedded in pre-fabricated concrete components and being attachable at holding portions (5) of the concrete component, in particular a steel reinforcement (2), such as a structural steel wire mesh, for which purpose the installation box (1) comprises at least one fixing web (3), **characterized by** that additionally a clamping web (4) is provided, in order to receive, between the latter and the fixing web (3), a holding portion (5) of the concrete component in a clamping manner, and that the installation box (1) comprises two mutually approximately parallel, laterally spaced fixing webs (3), between which the additional clamping web (4) is disposed.

2. The installation box according to claim 1, **characterized by** that the holding portion is a rod of the steel reinforcement.

3. The installation box according to claim 1, **characterized by** that the installation box (1) comprises at least one fixing bracket (6) forming two fixing webs (3), between which an additional clamping web (4) is disposed.

4. The installation box according to one of claims 1 to 3, **characterized by** that the installation box (1) comprises fixing webs (3) or fixing brackets (6) laterally protruding from the envelope, and preferably opposing each other.

5. The installation box according to one of claims 1 to 4, **characterized by** that the clamping web (4) extends substantially in parallel to the fixing web (3) or to the fixing webs (3).

6. The installation box according to one of claims 1 to 5, **characterized by** that the clamping web (4) is fixed with one end to the installation box (1) or is formed integrally therewith.

7. The installation box according to one of claims 1 to 5, **characterized by** that the clamping web (4) is fixed with one end to the fixing web (3) or is formed integrally therewith, or if a fixing bracket (6) with two fixing webs (3) is provided, is fixed to the bracket portion connecting the fixing webs (3) or is formed integrally therewith.

8. The installation box according to one of claims 1 to 7, **characterized by** that the clamping web (4) is approximately as long as the fixing web (3).

9. The installation box according to one of claims 1 to 8, **characterized by** that the clamping web (4) is configured in a resiliently flexible manner.

10. The installation box according to one of claims 1 to 9, **characterized by** that the clamping web (4) comprises latching means (11) on at least one of its surfaces, preferably on both surfaces which is or are arranged in parallel to a bottom (9) or an orifice (10) of the installation box (1).

11. The installation box according to claim 10, **characterized by** that the clamping web (4) is corrugated over its length, latching means (11) being formed by the wave crests and troughs.

12. The installation box according to one of claims 1 to 11, **characterized by** that the clamping web (4) is a strip of material having a small thickness and a large width, the larger sides extending in parallel to the bottom (9) or the orifice (10) of the installation box (1).

13. The installation box according to one of claims 1 to 12, **characterized by** that the clamping web (4) is oriented on its upper side and/or lower side approximately in parallel to a bottom (9) or an orifice (10) of the installation box (1) and comprises wedge-shaped support parts (12), the wedge shape thereof extending from the free end to the fixing end (7 or 8) of the clamping web (4) in a downwards sloping manner.

14. The installation box according to claim 13, **characterized by** that the clamping web (4) comprises, at the longitudinal peripheral edges of the upper side and/or lower side, wedge-shaped wall surfaces forming the wedge-shaped support parts (12).

15. The installation box according to one of claims 1 to 14, **characterized by** that the fixing web (3) or the fixing webs (3) comprises or comprise latching means (13) on at least one of its edge surfaces extending approximately in parallel to a bottom (9) or an orifice (10) of the installation box (1).

16. The installation box according to claim 15, **characterized by** that the edge surfaces are corrugated, so that the wave crests and troughs form the latching means (13).

17. The installation box according to one of claims 1 to 14, **characterized by** that the fixing web (3) or the fixing webs (3) is or are configured in a wedge-shaped manner on at least one of its or their edge surfaces extending approximately in parallel to a bottom (9) or an orifice (10) of the installation box (1), the wedge shape preferably sloping upwards from the end near to the installation box (1) to the end remote therefrom.

18. The installation box according to one of claims 1 to 17, **characterized by** that the fixing web (3) or the fixing webs (3) comprises or comprise, at its or their longitudinal side surfaces, hook means (14) or latching means, by means of which mutually parallel fixing webs (3) of installation boxes (1) arranged side-by-side can be connected to each other in a detachable manner.

19. The installation box according to one of claims 1 to 18, **characterized by** that the fixing webs (3) and/or the clamping webs (4) are fixed in a detachable manner to the body of the installation box (1) or at a closure cap (15) of the installation box (1).

20. The installation box according to one of claims 1 to 18, **characterized by** that the fixing webs (3) and/or the clamping webs (4) are an integral part of the box body or of a closure cap (15) of the installation box (1).

21. The installation box according to one of claims 1 to 20, **characterized by** that the fixing webs (3) have a U-shaped or V-shaped cross-section, the U-shape or V-shape being open toward the plane formed by the bottom (9) of the box or toward the plane formed by the orifice (10) of the installation box (1).

22. The installation box according to one of claims 1 to 21, **characterized by** that the fixing webs (3) and/or the clamping webs (4) are disposed eccentrically to the height of the installation boxes (1).

23. The installation box according to one of claims 1 to 22, **characterized by** that the box body of the installation box (1) and/or a lid (15) closing the orifice (10) of the installation box (1) comprises line-up means (16, 17), by means of which an installation box (1) and/or a lid (15) can be connected to another installation box (1) or another lid (15).

24. The installation box according to one of claims 1 to 23, **characterized by** that the components of the installation box (1), namely the box body, a lid (15) to be snapped onto the orifice (10) of the box body, and the fixing web or webs (3) and the clamping web or webs (4) form an injection-molding blank, the dividing plane of which extends in parallel to the bottom (9) or to the orifice (10) of the installation box (1), the lid (15) being connected by a breakable web (18) to a part of a fixing web (3) or to the box body.

## Revendications

1. Boîte d'installation (1) pour appareillages électriques, en particulier pour réception de composants électriques comme p.ex. des interrupteurs, prises de courant, boîtes de distribution, en particulier pour l'utilisation dans du béton, la boîte d'installation (1) étant incorporée de préférence dans des composants de béton préfabriqués et étant fixable à des parties de retenue (5) du composant de béton, en particulier une armature métallique (2), comme p.ex. un treillis en acier de construction, pour ce but la boîte d'installation (1) comprenant au moins une entretoise de fixation (3), **caractérisée en ce qu'**en addition une entretoise de serrage (4) est prévue, pour recevoir, entre cette dernière et l'entretoise de fixation (3), une partie de retenue (5) du composant de béton de façon serrante, et que la boîte d'installation (1) comprend deux entretoises de fixation (3) espacées latéralement et environ parallèles entre elles, entre lesquelles l'entretoise de serrage (4) additionnelle est disposée.

2. Boîte d'installation selon la revendication 1, **caractérisée en ce que** la partie de retenue est une tige de l'armature métallique.

3. Boîte d'installation selon la revendication 1, **caractérisée en ce que** la boîte d'installation (1) comprend au moins un étrier de fixation (6) formant deux entretoises de fixation (3), entre lesquelles une entretoise de serrage (4) additionnelle est disposée.

4. Boîte d'installation selon une des revendications 1 à 3, **caractérisée en ce que** la boîte d'installation (1) comprend des entretoises de fixation (3) ou des étriers de fixation (6) étant en saillie latéralement de l'enveloppe, de préférence en vis-à-vis.

5. Boîte d'installation selon une des revendications 1 à 4, **caractérisée en ce que** l'entretoise de serrage (4) s'étend essentiellement en parallèle à l'entretoise de fixation (3) ou aux entretoises de fixation (3).

6. Boîte d'installation selon une des revendications 1 à 5, **caractérisée en ce que** l'entretoise de serrage (4) à une extrémité est fixée à la boîte d'installation (1) ou est formée solidairement de celle-ci.

7. Boîte d'installation selon une des revendications 1 à 5, **caractérisée en ce que** l'entretoise de serrage (4) à une extrémité est fixée à l'entretoise de fixation (3) ou est formée solidairement de celle-ci, ou si un étrier de fixation (6) avec deux entretoises de fixation (3) est prévu, est fixée à la partie de l'étrier liant les entretoises de fixation (3) ou est formée solidairement de celle-ci.

8. Boîte d'installation selon une des revendications 1 à 7, **caractérisée en ce que** l'entretoise de serrage (4) est environ aussi longue que l'entretoise de fixation (3).

9. Boîte d'installation selon une des revendications 1 à 8, **caractérisée en ce que** l'entretoise de serrage (4) est configurée de façon élastique en flexion.

10. Boîte d'installation selon une des revendications 1 à 9, **caractérisée en ce que** l'entretoise de serrage (4) comprend des moyens d'encliquetage (11) sur au moins une de ses surfaces, de préférence sur les deux surfaces, qui est disposée ou sont disposées en parallèle à un fond (9) ou une orifice (10) de la boîte d'installation (1).

11. Boîte d'installation selon la revendication 10, **caractérisée en ce que** l'entretoise de serrage (4) est corruguée sur sa longueur, des moyens d'encliquetage (11) étant formés par les sommets et bases d'ondes.

12. Boîte d'installation selon une des revendications 1 à 11, **caractérisée en ce que** l'entretoise de serrage (4) est une bande de matériau d'une épaisseur faible et d'une largeur grande, les côtés plus grands s'étendant en parallèle au fond (9) ou à l'orifice (10) de la boîte d'installation (1).

13. Boîte d'installation selon une des revendications 1 à 12, **caractérisée en ce que** l'entretoise de serrage (4) est orientée sur son côté supérieur et/ou côté inférieur environ en parallèle à un fond (9) ou une orifice (10) de la boîte d'installation (1) et comprend des pièces de support (12) en forme de coin, la forme de coin de celles-ci s'étendant à partir de l'extrémité libre à extrémité de fixation (7 ou 8) de l'entretoise de serrage (4) de façon descendante.

14. Boîte d'installation selon la revendication 13, **caractérisée en ce que** l'entretoise de serrage (4) comprend aux arêtes périphériques longitudinales du côté supérieur et/ou du côté inférieur des surfaces de paroi en forme de coin formant les pièces de support (12) en forme de coin.

15. Boîte d'installation selon une des revendications 1 à 14, **caractérisée en ce que** l'entretoise de fixation (3) ou les entretoises de fixation (3) comprend ou comprennent des moyens d'encliquetage (13) sur au moins une de ses surfaces d'arête s'étendant environ en parallèle à un fond (9) ou une orifice (10) de la boîte d'installation (1).

16. Boîte d'installation selon la revendication 15, **caractérisée en ce que** les surfaces d'arête sont corruguées, de façon que les sommets et bases d'ondes forment les moyens d'encliquetage (13).

17. Boîte d'installation selon une des revendications 1 à 14, **caractérisée en ce que** l'entretoise de fixation (3) ou les entretoises de fixation (3) est configurée ou sont configurées en forme de coin sur au moins une de ses surfaces d'arête s'étendant environ en parallèle à un fond (9) ou une orifice (10) de la boîte d'installation (1), la forme de coin de préférence ascendant à partir de l'extrémité proche de la boîte d'installation (1) à l'extrémité loin de celle-ci.

18. Boîte d'installation selon une des revendications 1 à 17, **caractérisée en ce que** l'entretoise de fixation (3) ou les entretoises de fixation (3) comprend ou comprennent, à ses ou leurs surfaces des côtés longitudinaux, des moyens de crochet (14) ou des moyens d'encliquetage, au moyen desquels des entretoises de fixation (3) parallèles entre elles de boîtes d'installation (1) disposées côté à côté peuvent être liées ensemble de façon amovible.

19. Boîte d'installation selon une des revendications 1 à 18, **caractérisée en ce que** les entretoises de fixation (3) et/ou les entretoises de serrage (4) sont fixées de façon amovible au corps de la boîte d'installation (1) ou à un couvercle de fermeture (15) de la boîte d'installation (1).

20. Boîte d'installation selon une des revendications 1 à 18, **caractérisée en ce que** les entretoises de fixation (3) et/ou les entretoises de serrage (4) sont des pièces solidaires du corps de la boîte ou du couvercle de fermeture (15) de la boîte d'installation (1).

21. Boîte d'installation selon une des revendications 1 à 20, **caractérisée en ce que** les entretoises de fixation (3) ont une section en U ou V, la forme en U ou V étant ouverte vers le plan formé par le fond (9) de la boîte ou vers le plan formé par l'orifice (10) de la boîte d'installation (1).

22. Boîte d'installation selon une des revendications 1 à 21, **caractérisée en ce que** les entretoises de fixation (3) et/ou les entretoises de serrage (4) sont disposées excentriquement à la hauteur des boîtes d'installation (1).

23. Boîte d'installation selon une des revendications 1 à 22, **caractérisée en ce que** le corps de la boîte d'installation (1) et/ou un couvercle (15) fermant l'orifice (10) de la boîte d'installation (1) comprend des moyens d'alignement (16, 17), au moyen desquels une boîte d'installation (1) et/ou un couvercle (15) peut être lié à une autre boîte d'installation (1) ou un autre couvercle (15).

24. Boîte d'installation selon une des revendications 1 à 23, **caractérisée en ce que** les composants de la boîte d'installation (1), c'est-à-dire le corps de la boîte, le couvercle (15) à être encliqueté sur l'orifice (10) du corps de la boîte, et l'entretoise ou les entretoises de fixation (3) et l'entretoise ou les entretoises de serrage (4) forment une ébauche d'injection-compression, le plan de séparation de laquelle s'étend en parallèle au fond (9) ou à l'orifice (10) de la boîte d'installation (1), le couvercle (15) étant lié par une entretoise (18) sécable à une partie d'une entretoise de fixation (3) ou au corps de la boîte.
